# EUROPEAN PATENT SPECIFICATION

(11) **EP 1 748 354 B1**
(45) Date of publication and mention of the grant of the patent: **09.05.2012**
(21) Application number: 05016478.9
(22) Date of filing: 29.07.2005
(51) Int. Cl.: G06F 3/048, G06F 9/44, H04N 5/445, G06F 3/033

(54) **A method for managing and displaying messages and device for managing and displaying messages**
Verfahren und Vorrichtung zur Verwaltung und Anzeige von Nachrichten
Procédé et dispositif pour la gestion et la visualisation de messages.

(43) Date of publication of application: 31.01.2007
(73) Proprietor: Advanced Digital Broadcast S.A., 1292 Pregny-Chambesy (CH)
(72) Inventor: Kwolek, Robert, 68-200 - Zary (PL)
(74) Representative: Pawlowski, Adam

(56) References cited:
- US-A1- 2002 063 727
- US-A1- 2003 011 639
- US-A1- 2005 024 341

## Description

The invention relates to a method for displaying pop-up messages and a device for displaying pop-up messages, applicable for example in cellular phones, personal digital assistants (PDA) or digital television receivers.

Nowadays the graphical user interfaces (GUI) present so many information and layers that the users often get confused about which of the layers is on top and what action is expected from the user. This confusion may sometimes lead to choosing a wrong option or pressing an invalid key, which may in turn result in an action that would not have been executed by the user if he/she had had properly presented information and time to read it.

The particular problem, addressed by the present invention, is related to GUI pop-up messages, which are often displayed without user's request. Such messages are for example high priority system messages, which have to be displayed regardless of the current state of the GUI. Moreover such messages or dialog windows are displayed without any action from the user unlike for example 'Open' or 'Save As' dialog windows.

Although the high-priority system pop-up messages are usually welcome by the user, having windows pop up with messages while a user is working on other documents can be distracting and frustrating, which may lead the user to closing all messages windows without paying any attention to their content that could sometimes be of vital importance.

One example of distracting messages can occur in a word-processing when a pop-up message appears. In other words, the word processing document moves from the foreground to the background, while the pop-up window moves to the foreground. If the user is typing information, this input is redirected into the pop-up window, rather than the document, since the pop-up becomes the active window.

Further example could be the case when a user is typing an SMS (Short Text Message) in a mobile phone and an instant message, for example information about an incoming call, is received, a pop-up window changing the focus is displayed and the user may unintentionally receive or dismiss the call while the intention was to use the same control (for example Yes/No button) in the SMS window.

A change in focus also may occur with respect to any application that pushes a window to the foreground. As a result, similar problems may result from other applications.

The patent application US 2004/0189712 A1, entitled "Method and apparatus for managing windows", presents a method in a data processing system for managing windows, the method comprising: responsive to receiving a request to present a pop-up window in a foreground for an application, monitoring a buffer for user input; determining whether the application is an interruptible application; and presenting the pop-up window to the foreground if user input is absent and if the application is an interruptible application. The system requires each application to identify itself as interruptible or not and allows the pop-up to be shown only when the user input has been absent for a predefined time period.

In case of system pop-ups of high importance, which must be shown to the user, the '712 method does not provide suitable solution since in case o such events, which cause problems the user input is often present during the time the pop-up is shown or close to the event. The step 514 of the Fig. 5 of the '712 patent application requires the user input to stop before the pop-up may be shown. This solution is not sufficient because of the time required to elapse before the user stops for example typing (in case of mobile phones, the caller may hung up) and because just after the system decides to display pop-up the user may start typing again, which would again cause the problems related to focus management.

The patent application US 2005/0066290 A1, entitled "Pop-up capture", presents system for controlling a pop-up window from being displayed on a computer, the system comprising: a pop-up monitor to detect a request to display a pop-up window; and a pop-up inhibitor to prevent the displaying of a pop-up window if a current user of the computer has not requested the pop-up window to be displayed. This solution is more applicable to advertisements in Internet browsers. However, in case of system pop-ups of high importance, which must be shown to the user, it would also be prevented from displaying, which is not advantageous.

A European patent EP1555796B1 presents an on vehicle handsfree system, wherein when an incoming call arrives, a handsfree unit informs a user about an arrival of the incoming call, and sets a user operation invalid state in which any user operation is made invalid during a predetermined period. When a user operation is performed in the user operation invalid state, the handsfree unit causes the user operation to be invalid. Therefore, all user interface controls are disabled during the invalid state.

Therefore, it would be desirable to provide an improved method and device for managing windows, such as pop-up windows, in a data processing system. Such method shall allow for presentation of important messages while managing the focus problems and its automatic change.

The object of the invention is a method for managing and displaying messages comprising the steps of displaying at least one application of which at least one is currently active application and accepting user actions related to the currently active applications, accepting a request to display a message. Wherein further, according to the method, the controls present in the message are analyzed and the information about them is stored in the memory, next based on the analysis and comparison with other displayed controls of the active applications, at least some of the controls present in the message are temporarily disabled in the message and the currently active applications in the system and after a predefined event has occurred the controls previously disabled are enabled. It is favourable when:
- the predefined event is an elapsed time set upon showing the message;
- the controls are keyboard keys or buttons of a remote controller unit;
- only the controls present in both the message to be shown and the active applications are temporarily disabled;
- the request to show a message is registered in the applications manager in order to decide, which controls of the message may cause conflict with the currently active applications;
- the currently active application is the application currently in focus;
- the message is a window informing about an incoming call;
- in case there are no common controls between the message to be shown and any of the currently active applications, the controls are not disabled and the system does not start monitoring of the predefined event.

Another object of the invention is a device managing and displaying messages. The device comprises an applications management block, a GUI context management block and a controls manager block, wherein the applications management block is connected to the GUI context management block and sends information on controls the new message will be utilizing, the GUI context management block is connected to the controls manager block, which accepts requests from the GUI context management block to disable at least some of the controls of the currently active applications and the message to be shown.

The invention will now be described by way of example and with reference to the accompanying drawings in which:
- Fig. 1 shows a simplified block diagram of the digital television decoder, containing only elements required for presenting the idea of the method according to the invention;
- Fig. 2 shows a flowchart describing the first embodiment of a process controlling the displaying of pop-up windows;
- Fig. 3 shows a flowchart describing the second embodiment of a process controlling the displaying of pop-up windows;
- Fig. 4A, 4B and 4C show an example of a pop-up window controlled by the system.

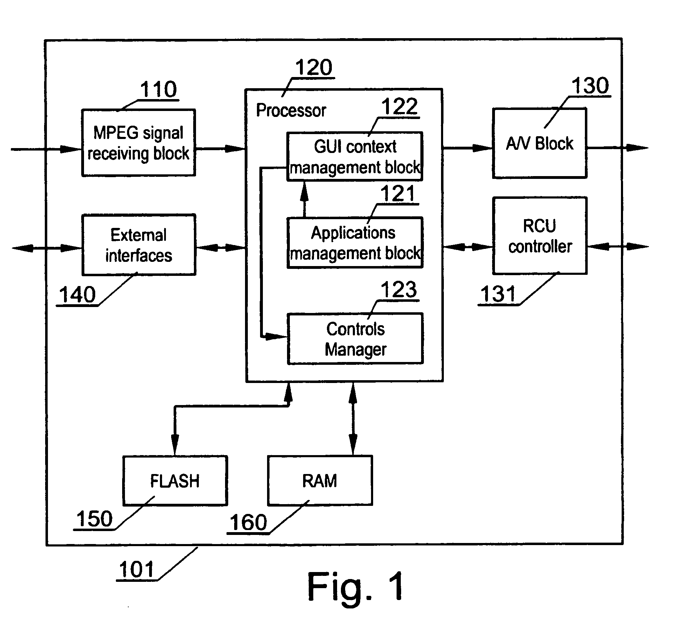

The decoder of digital television 101, for which the solution according to the present invention may be applied, is divided into many modules, while its simplified version was shown in Fig. 1, as mentioned above. It should be noted however, that the method may be applied in any device with a display.

The most important module of the decoder is a processor 120, which comprises an applications management block 121 for managing the GUI applications present in the system. Additionally, according to the invention, the processor 120 includes an internal GUI context management block 122, which manages the control elements of the applications for example buttons. This block checks, which controls could cause problems when the new signaled application or message will be shown. The referenced context typically means all controls in the active windows and the controls of the message to be shown and the relation between them. These data are used to anticipate possible conflicts when the new messages are shown when the user for example is typing. Additionally there is a controls manager block 123, which manages the controls of the application or window on the basis of data provided by the GUI context management block 122. The management means disabling selected controls for a predefined period of time. This block interacts with each controlled application by sending commands in order to temporarily disable selected GUI controls.

The applications management block 121 is connected to the GUI context management block 122 and sends information about the controls the new message window will be utilizing. In turn the GUI context management block 122 is connected to the controls manager block 123, which accepts requests from the GUI context management block 122 to temporarily disable selected controls of the GUI windows to be shown.

In another example of embodiment, the blocks 121, 122 and 123 can be separate modules placed outside the processor.

There is signal from MPEG signal reception block 110, in the receiver, connected to the processor 120. The MPEG stream is hereby referenced for exemplary purposes only and therefore other audio/video data coding and transmission standards may by used. Some of the applications run on the decoder may be downloaded from source signal received by the signal reception block 110.

Additionally the processor has a possibility of bi-directional exchange of data through external interfaces 140. The digital television decoder 101 includes also a few types of memory, which are bi-directionally connected with the processor 120. These are the non-volatile memory (for example, of FLASH type 150 and operational RAM memory 160. There are programs for controlling the operation of the digital television decoder 101 stored in these memories. The applications that show pop up windows are also stored in these memories.

The block A/V 130 and the remote control unit block 131 allow to transmit the output AN signal and communicate with external control devices, for example a remote control unit.

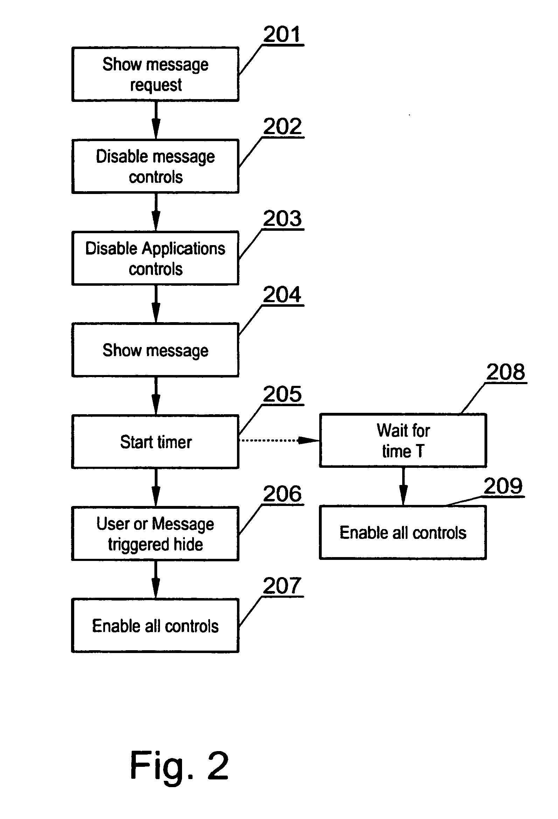

Fig. 2 shows a flowchart describing the first embodiment of a process controlling the displaying of pop-up windows. This is an example of a system, which has a common events manager that captures events and then passes them to all applications. Therefore a command may be executed, which will block passing the selected events to all the applications. The procedure starts in place 201 from a request to show a message window. Such request shall provide information to the applications manager on which controls the message will be using so that these keys may be disabled in step 202 of the procedure. The next step is to disable the controls of active application or applications 203. In the step 204 of the procedure, the message is shown, typically it will be a system pop-up window not triggered by the user. In the next step, a timer is started 205 with a predefined time, typically 1 or 2 seconds, during which the controls will be disabled so that the user cannot execute any unwanted actions. The timer is managed by a separate process in steps 208 and 209, which, after the time elapses, enable all locked controls. After the timer is started, the system waits in step 206 for the message to hide automatically or manually when the specified time has elapsed. When the message is to be hidden all temporarily disabled controls are enabled in step 207 of the procedure. In case when the message to be shown does not contain any controls (for example a message with a timeout) the procedure is limited to only showing the message after the request is received. The difference between steps 207 and 209 is that if the message has an auto-hide timer, which elapses sooner than the timer set in the step 205 the disabled controls will be enabled as soon as the auto-hide event occurs (In this case the timer set in the step 205 is also disabled). Otherwise when there is no auto-hide programmed, the controls will be enabled in the step 209.

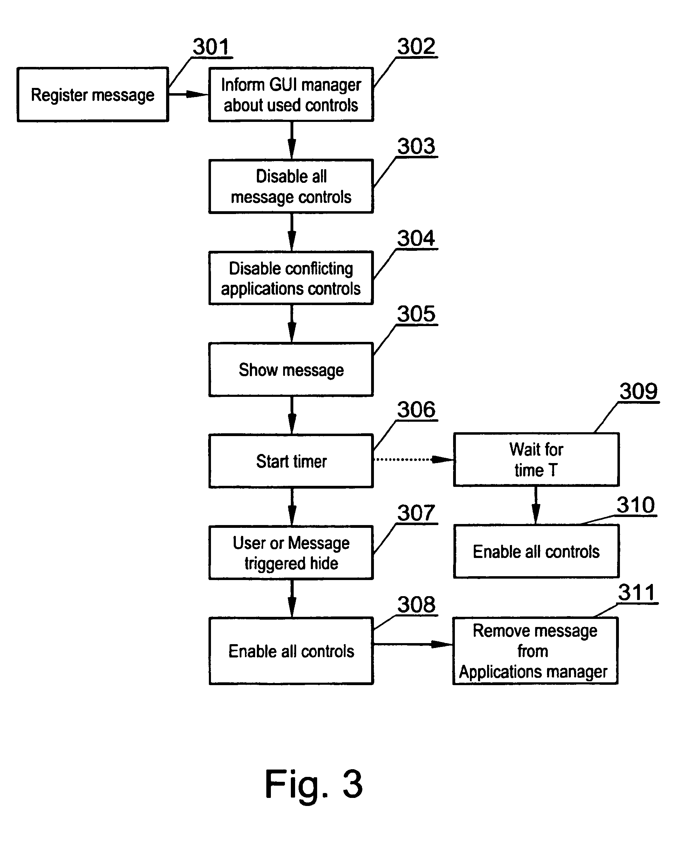

Fig. 3 shows a flowchart describing the second embodiment of a process controlling the displaying of pop-up windows. This is an example of a system, which has an applications manager 121 and GUI context manager 122, which communicate with all system applications and may enable or disable, via the controls manager block 123, the processing of all or some of the events by the selected applications, including system messages windows. The procedure starts in step 301 from a request to show a message window and registering it in the applications manager. The registered data will be passed in step 302 to the GUI context management block. Such request shall provide information on which controls it will be using so that these controls may be disabled in step 303 of the procedure. The next step is to disable the controls of active application or applications, which may cause conflict with the message to be shown 304, i.e. the same events are captured and processed by the currently active application(s) and the message to be shown. For example when the active application uses the control keys '1', '2', 'Cancel' and the new message will be using the control keys 'OK', 'Cancel', only the OK and Cancel (or 'Cancel' only since it's common for both applications) events will be blocked while the '1' and '2' events will be processed. This will prevent the user from pressing 'Cancel' on the message window while the intention was to apply it to the application window. The control key in this context shall not be limited to keyboard events. The events may originate from other input devices like a remote controller, a game pad or a touch screen. In the step 305 of the procedure, the message is shown, typically it will be a system pop-up window not triggered by the user. In the next step, a timer is started 306 with a predefined time, typically 1 or 2 seconds, during which the selected controls will be disabled so that the user cannot execute any unwanted actions. The timer is managed by a separate process in steps 309 and 310, which, after the time elapses, enable all locked buttons. After the timer is started, the system waits in step 307 for the message to hide automatically or manually when the specified time has elapsed. When the message is to be hidden all temporarily disabled controls are enabled in step 308 of the procedure. The last step 311 is to remove the massage from the applications manager.

In case when the message to be shown does not contain any controls (for example a message with a timeout) the procedure moves directly from step 302 to step 305 and then directly to step 311 and is limited to only showing the message after the request is received since there is no possible conflict with the controls of the currently active applications.

It is to be understood that the method of passing the information on controls used by the applications may be implemented in various ways.

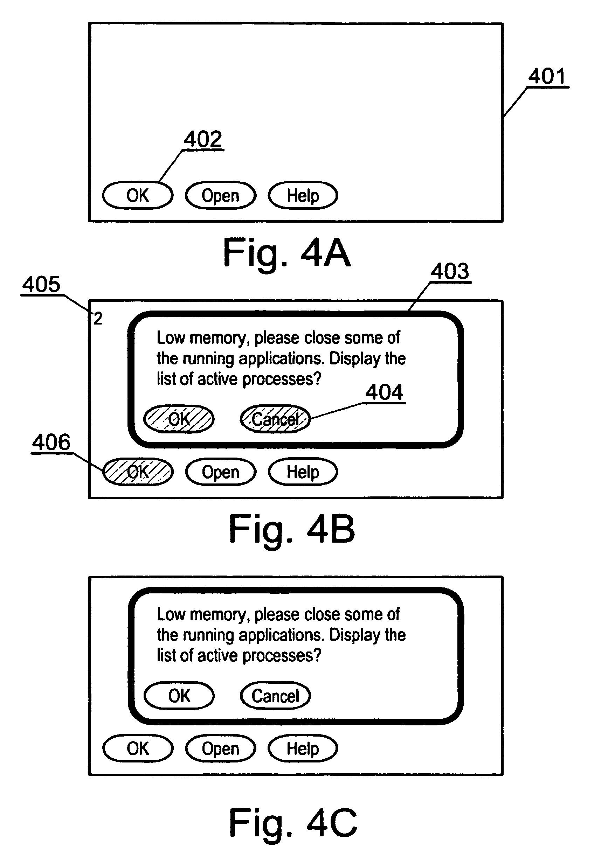

Fig. 4A, 4B and 4C show an example of a pop-up window controlled by the system according to the present invention. Fig. 4A presents a display 401 with an active application, which uses the 'OK', 'Open' and 'Help' buttons 402. When a new pop-up message window 403 is displayed the screen presents a view as shown in Fig. 4B. Since the 'OK' button 406 is present in both the application and the message it has been disabled for the time period specified for the convenience of the user by the counter 405. All buttons 404 of the pop-up message window are disabled until the time elapses. In fact the 'Cancel' button can be left enabled since it does not cause conflict with any of the button of the currently active application. When the specified time has elapsed, the buttons are enabled as shown in Fig. 4C so that the user can take any action after reading the displayed message. Were it not for the system according to the invention the user could press the 'OK' button with an intention to invoke action of the currently active application but because of the time required from the decision to the registration of the user action the action could be executed on the message window that would be shown just before the user invokes the action (for example presses a button).

The invention is most suitable for system events and alerts, however it may also be implemented in Internet browsers, which also use pop-up messages.

The present invention, therefore, is well adapted to carry out the objects and advantages mentioned. While the present invention has been depicted, described, and is defined by reference to particular preferred embodiments of the invention, such references in the foregoing specification do not imply a limitation on the invention. It will, however, be evident that various modifications and changes may be made thereto without departing from the broader scope of the invention. The presented preferred embodiments of the invention are exemplary only, and are not exhaustive of the scope of the invention.

The scope of the invention is defined by the appended claims.

## Claims

1. A method for managing and displaying user interface windows comprising the steps of:
• displaying at least one application of which at least one is an application currently in focus;
• accepting user actions related to the at least one application currently in focus;
• accepting a request to display a user interface window, said request being initiated by the underlying system without any action from the user
• identifying a first set of user interface controls present in the user interface window (302) and a first set of control keys to which the first set of identified user interface controls respond;
• identifying a second set of user interface controls present in the at least one application currently in focus and a second set of control keys to which the second set of identified user interface controls respond;
• determining common control keys of the first and the second sets of control keys to which both the user interface controls present in the user interface window and user interface controls present in the at least one application currently in focus respond;
• temporarily disabling, at least in the user interface window (202), only the user interface controls responsive to the common control keys.
• displaying the user interface window (204, 305); and
• enabling (207, 310) previously disabled controls after a predefined event has occurred.

2. The method, according to claim 1, **characterized in that** the predefined event is an elapsed time (208, 309) set upon showing the user interface window.

3. The method, according to claim 1, **characterized in that** the user interface controls are software buttons (402).

4. The method, according to claim 1, **characterized in that** the user interface controls are software widgets.

5. The method, according to claim 1, **characterized in that** the request to show a user interface window is registered in the applications manager in order to decide, which user interface controls of the user interface window may cause a conflict with the at least one application currently in focus.

6. The method, according to claim 1, **characterized in that** the user interface window is a window informing about an incoming call.

7. The method, according to claim 1, **characterized in that** in case there are no common user interface controls between the user interface window to be shown and any of the at least one application currently in focus, the user interface controls are left enabled and the step of monitoring for a predefined event is not invoked.

8. A device managing and displaying the user interface windows working according to the method claimed in any of Claims 1 to 7 **characterized in that** it comprises:
• an applications management block (121) for managing at least one application currently in focus and for sending information on user interface controls having corresponding control keys, a new user interface window will be utilizing,
• a GUI context management block (122) for managing user interface control elements of applications via a controls manager block (123) for accepting requests from the GUI context management block (122) to disable at least some of the user interface controls of the at least one application currently in focus and the new user interface window to be shown, whereby the applications management block (121) is connected to the GUI context management block (122), the GUI context management block (122) is connected to the controls manager block (123).

9. A computer program comprising program code means for performing all the steps of a method as claimed in any of claims 1 to 7 when said program is run on a computer.

10. A computer readable medium having computer-executable instructions performing all the steps of the computer implemented method according to any of claims 1 to 7.

## Patentansprüche

1. Verfahren zum Verwalten und Darstellen von Benutzerschnittstellenfenstern, umfassend die Schritte:
Darstellen von wenigstens einer Anwendung, von welcher wenigstens eine eine Anwendung ist, die derzeit im Fokus ist;
Akzeptieren von Benutzerhandlungen, welche auf die wenigstens eine Anwendung, die derzeit im Fokus ist, bezogen sind;
Akzeptieren einer Anfrage zum Darstellen eines Benutzerschnittstellenfensters, wobei die Anfrage durch das zugrundeliegende System ohne eine Handlung des Benutzers initiiert wird;
Identifizieren einer ersten Menge von Benutzerschnittstellen-Steuerungen, welche im Benutzerschnittstellenfenster (302) vorliegen, und einer ersten Menge von Steuerungstasten/-schlüsseln, auf welche die erste Menge von identifizierten Benutzerschnittstellen-Steuerungen antwortet;
Identifizieren einer zweiten Menge von Benutzerschnittstellen-Steuerungen, welche in der wenigstens einen Anwendung, welche derzeit im Fokus ist, vorliegen, und einer zweiten Menge von Steuerungstasten/-schlüsseln, auf welche die zweite Menge von identifizierten Benutzerschnittstellen-Steuerungen antwortet;
Bestimmen von gemeinsamen Steuerungstasten/-schlüsseln der ersten und der zweiten Menge von Steuerungstasten/-schlüsseln, auf welche sowohl die Benutzerschnittstellen-Steuerungen, die in dem Benutzerschnittstellenfenster vorliegen, und die Benutzerschnittstellen-Steuerungen, die in der wenigstens einen Anwendung, die derzeit im Fokus ist, antworten;
zeitweiliges Außer-Betrieb-Setzen, wenigstens in dem Benutzerschnittstellenfenster (202), von nur den Benutzerschnittstellen-Steuerungen, die auf die gemeinsamen Steuerungstasten/-schlüssel antworten.
Darstellen des Benutzerschnittstellenfensters (204, 305); und
In-Betrieb-Setzen (207, 310) von vorangehend außer Betrieb gesetzten Steuerungen, nachdem ein vordefiniertes Ereignis eingetreten ist.

2. Verfahren nach Anspruch 1, **dadurch gekennzeichnet, dass** das vordefinierte Ereignis eine verstrichene Zeit (208, 309) ist, welche auf das Zeigen des Benutzerschnittstellenfensters hin eingestellt wird.

3. Verfahren nach Anspruch 1, **dadurch gekennzeichnet, dass** die Benutzerschnittstellen-Steuerungen Softwareschaltflächen (402) sind.

4. Verfahren nach Anspruch 1, **dadurch gekennzeichnet, dass** die Benutzerschnittstellen-Steuerungen Software-Widgets sind.

5. Verfahren nach Anspruch 1, **dadurch gekennzeichnet, dass** die Anfrage, das Benutzerschnittstellenfenster zu zeigen, in der Anwendungsverwaltung registriert ist, um zu entscheiden, welche Benutzerschnittstellen-Steuerungen des Benutzerschnittstellenfensters einen Konflikt mit der wenigstens einen Anwendung, die derzeit im Fokus ist, erzeugen können.

6. Verfahren nach Anspruch 1, **dadurch gekennzeichnet, dass** das Benutzerschnittstellenfenster ein Fenster ist, das über einen eingehenden Anruf informiert.

7. Verfahren nach Anspruch 1, **dadurch gekennzeichnet, dass** im Fall, dass es keine gemeinsamen Benutzerschnittstellen-Steuerungen zwischen dem zu zeigenden Benutzerschnittstellenfenster und einer beliebigen der wenigstens einen Anwendung, die derzeit im Fokus ist, gibt, die Benutzerschnittstellen-Steuerungen in Betrieb gesetzt belassen werden und der Überwachungsschritt für ein vordefiniertes Ereignis nicht aufgerufen wird.

8. Vorrichtung zum Verwalten und Darstellen der Benutzerschnittstellenfenster, welche gemäß dem Verfahren nach einem der Ansprüche 1 bis 7 arbeitet, **dadurch gekennzeichnet, dass** es umfasst:
einen Anwendungsverwaltungsblock (121) zum Verwalten von wenigstens einer Anwendung, die derzeit im Fokus ist, und zum Senden von Information über Benutzerschnittstellen-Steuerungen, die entsprechende Steuerungstasten/-schlüssel aufweisen, welche ein neues Benutzerschnittstellenfenster verwenden wird,
einen GUI Kontextverwaltungsblock (122) zum Verwalten von Benutzerschnittstellen-Steuerungselementen von Anwendungen mittels eines Steuerungsverwaltungsblocks (123) zum Akzeptieren von Anfragen von dem GUI Kontextverwaltungsblock (122), um wenigstens einige der Benutzerschnittstellen-Steuerungen von der wenigstens einen Anwendung, die derzeit im Fokus ist, und dem neu zu zeigenden Benutzerschnittstellenfenster außer Betrieb zu setzen, wodurch der Anwendungsverwaltungsblock (121) mit dem GUI Kontextverwaltungsblock (122) verbunden wird, wobei der GUI Kontextverwaltungsblock (122) mit dem Steuerungsverwaltungsblock (123) verbunden ist.

9. Computerprogramm, umfassend Programmcodemittel zum Ausführen all der Schritte eines Verfahrens nach einem der Ansprüche 1 bis 7, wenn das Programm auf einem Computer ausgeführt wird.

10. Computerlesbares Medium, welches computerausführbare Anweisungen aufweist, die all die Schritte des computerimplementierten Verfahrens nach einem der Ansprüche 1 bis 7 ausführen.

## Revendications

1. Procédé de gestion et d'affichage de fenêtres d'interface utilisateur comprenant les étapes consistant à :
- afficher au moins une application parmi lesquelles au moins une est une application actuellement en point de mire ;
- accepter les actions utilisateur correspondant à l'au moins une application actuellement en point de mire ;
- accepter une demande d'affichage d'une fenêtre d'interface utilisateur, ladite demande étant lancée par le système sous-jacent sans une quelconque action de l'utilisateur ;
- identifier un premier ensemble de commandes d'interface utilisateur présentes dans la fenêtre d'interface utilisateur (302) et un premier ensemble de touches de commande auquel répond le premier ensemble de commandes d'interface utilisateur identifiées ;
- identifier un second ensemble de commandes d'interface utilisateur présentes dans l'au moins une application actuellement en point de mire et un second ensemble de touches de commande auquel répond le second ensemble de commandes d'interface utilisateur identifiées ;
- déterminer les touches de commande communes du premier et du second ensembles de touches de commande auxquelles répondent à la fois les commandes d'interface utilisateur présentes dans la fenêtre d'interface utilisateur et les commandes d'interface utilisateur présentes dans l'au moins une application actuellement en point de mire ;
- désactiver provisoirement, au moins dans la fenêtre d'interface utilisateur (202), les seules commandes d'interface utilisateur répondant aux touches de commande communes ;
- désactiver la fenêtre d'interface utilisateur (204, 305) ; et
- activer (207, 310) les commandes précédemment désactivées une fois qu'un événement prédéfini s'est produit.

2. Procédé, selon la revendication 1, **caractérisé en ce que** l'événement prédéfini est un temps écoulé (208, 309) défini lors de la présentation de la fenêtre d'interface utilisateur.

3. Procédé, selon la revendication 1, **caractérisé en ce que** les commandes d'interface utilisateur sont des boutons de logiciel (402).

4. Procédé, selon la revendication 1, **caractérisé en ce que** les commandes d'interface utilisateur sont des composants d'interface graphique de logiciel.

5. Procédé, selon la revendication 1, **caractérisé en ce que** la demande de présentation d'une fenêtre d'interface utilisateur est enregistrée dans le gestionnaire des applications afin de décider quelles sont les commandes d'interface utilisateur de la fenêtre d'interface utilisateur qui peuvent causer un conflit avec l'au moins une application actuellement en point de mire.

6. Procédé, selon la revendication 1, **caractérisé en ce que** la fenêtre d'interface utilisateur est une fenêtre d'information sur un appel entrant.

7. Procédé, selon la revendication 1, **caractérisé en ce que** dans le cas où il n'existe pas de commandes d'interface utilisateur communes entre la fenêtre d'interface utilisateur devant être présentée et n'importe laquelle de l'au moins une application actuellement en point de mire, les commandes d'interface utilisateur sont laissées dans l'état activé et l'étape de surveillance d'un événement prédéfini n'est pas invoquée.

8. Dispositif de gestion et d'affichage des fenêtres d'interface utilisateur fonctionnant selon le procédé défini dans l'une quelconque des revendications 1 à 7, **caractérisé en ce qu'**il comprend :
- un bloc de gestion des applications (121) destiné à gérer au moins une application actuellement en point de mire et à envoyer des informations sur les commandes d'interface utilisateur ayant des touches de commande correspondantes, qu'une nouvelle fenêtre d'interface utilisateur va utiliser,
- un bloc de gestion de contexte d'interface utilisateur graphique (122) destiné à gérer les éléments d'application de commande d'interface utilisateur via un bloc gestionnaire de commandes (123) pour accepter les demandes du bloc de gestion de contexte d'IUG (122) de désactivation d'au moins certaines des commandes d'interface utilisateur de l'au moins une application actuellement en point de mire et de la nouvelle fenêtre d'interface utilisateur devant être présentée, moyennant quoi le bloc de gestion des applications (121) est connecté au bloc de gestion de contexte d'IUG (122), le bloc de gestion de contexte d'IUG (122) est connecté au bloc gestionnaire des commandes (123).

9. Programme informatique comprenant des moyens de codage de programme pour effectuer l'ensemble des étapes d'un procédé selon l'une quelconque des revendications 1 à 7 lorsque ledit programme est exécuté sur un ordinateur.

10. Support lisible par ordinateur comportant des instructions exécutables par ordinateur effectuant l'ensemble des étapes du procédé mis en oeuvre par ordinateur selon l'une quelconque des revendications 1 à 7.
